# DEMANDE DE BREVET EUROPEEN

(11) **EP 2 209 192 A1**
(43) Date de publication de la demande: **21.07.2010**
(21) Numéro de dépôt: 10150128.6
(22) Date de dépôt: 05.01.2010
(51) Int. Cl.: H02K 23/22, H02K 23/24

(54) **Machine électrique tournante, en particulier pour un démarreur de véhicule automobile**

(30) Priorité: 15.01.2009 FR 0950196
(71) Demandeur: VALEO EQUIPEMENTS ELECTRIQUES MOTEUR, 94046 Créteil (FR)
(72) Inventeur: Labbe, Nicolas, 69007, Lyon (FR); Dupeux, Benoit, 38690, Oyeu (FR); Yonnet, Jean-Paul, 38240, Meylan (FR)
(74) Mandataire: de Lambilly Delorme, Marie Pierre

(57) **Abrégé**

L'invention a pour objet une machine électrique tournante à courant continu, notamment pour un démarreur de véhicule automobile, la machine comportant :
- un stator (3) comportant une structure bobinée (50) formant une pluralité de pôles (61), s'étendant suivant une circonférence du stator (3),
- un rotor (2),
- un groupe de balais agencés pour permettre l'alimentation électrique du rotor (2) par commutation du courant électrique dans des sections du rotor (2), la structure bobinée (50) du stator (3) comportant une pluralité d'encoches (56) entre deux parties centrales (62) de pôles consécutifs (61) dudit stator (3), ces encoches (56) étant formées dans un corps magnétique (54) du stator (3), et au moins une de ces encoches (56) comprenant au moins un segment conducteur (55) formant un enroulement (58) de bobinage électrique (52).

## Description

La présente invention concerne notamment une machine électrique tournante, en particulier pour un démarreur de véhicule automobile.

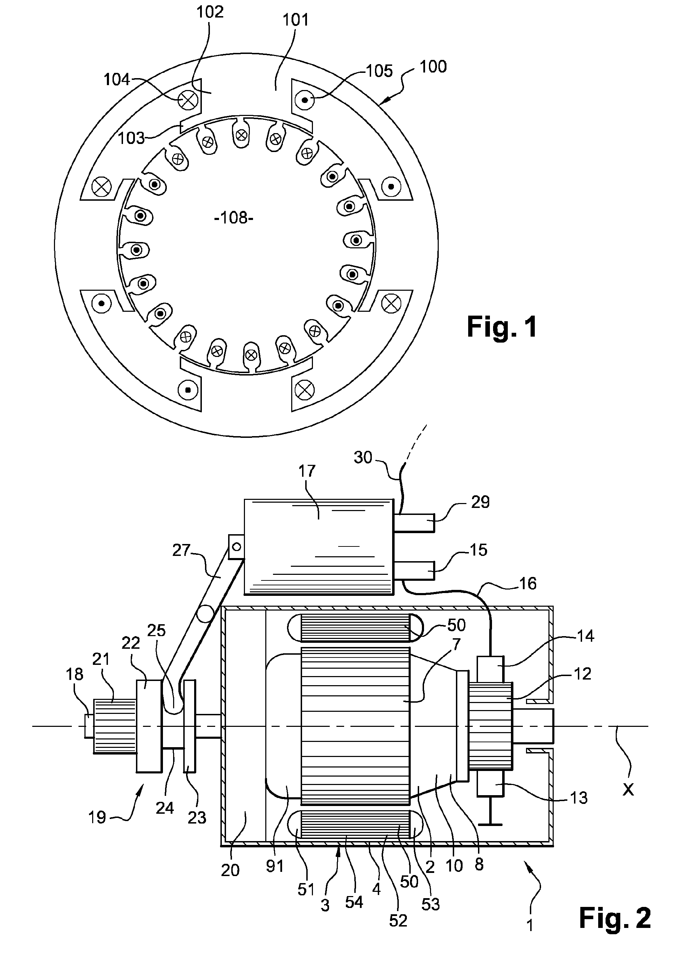

Comme visible sur la figure 1, on connaît un démarreur comportant un stator 100 pourvu d'une pluralité de pôles magnétiques 101 disposés sur une surface circonférentielle interne d'une culasse. Chaque pôle magnétique 101 est formé par un noyau polaire métallique 102 autour duquel est enroulée une bobine inductrice 104 parcourues par un courant continu. Ce noyau polaire 102 comporte un épanouissement polaire 103 qui le prolonge vers un rotor 108.

Le problème avec ce démarreur est que pour améliorer le couple magnétique moteur, et en conséquence son rendement, il faut enrouler plus de spires sur les bobines inductrices et/ou augmenter la section des noyaux polaires. Cette amélioration du couple et du rendement implique nécessairement un encombrement plus grand du démarreur.

Il a été constaté qu'une forte réaction magnétique d'induit dans une machine électrique à courant continu à balais, en particulier dans un démarreur présentant une force magnéto-motrice (fmm) de grande intensité en très basse tension et en puissance utile supérieure à 1 kW, peut entraîner une baisse de performance de la machine. Dans certains cas, un décalage angulaire des balais et/ou un enroulement de compensation ou d'aide à la commutation sont utilisés pour pallier les effets liés à la réaction d'induit. Le décalage angulaire des balais est optimal seulement pour un courant électrique prédéterminé et peut dégrader le couple utile délivré. De plus l'enroulement précité est généralement encombrant.

Un but de l'invention est de proposer une machine électrique tournante présentant un meilleur couple utile volumique, et en conséquence une meilleure puissance utile volumique et un meilleur rendement. On peut donc améliorer les performances avec la même taille de machine.

L'invention a pour objet une machine électrique tournante à courant continu, notamment pour un démarreur de véhicule automobile, la machine comportant :
- un stator, ou inducteur, comportant une structure bobinée formant une pluralité de pôles, s'étendant suivant une circonférence du stator,
- un rotor, ou induit,
- un groupe de balais agencés pour permettre l'alimentation électrique du rotor par commutation du courant électrique dans des sections du rotor,
la machine étant caractérisée par le fait que la structure bobinée du stator comporte une pluralité d'encoches, notamment sensiblement fines, entre deux parties centrales de pôles consécutifs dudit stator, ces encoches étant formées dans un corps magnétique du stator, et par le fait qu'au moins une de ces encoches comprend au moins un segment conducteur formant un enroulement de bobinage électrique et que la structure bobinée du stator comporte au moins un secteur formant un pôle, les encoches étant disposées sur des zones entourant la partie centrale du pôle.

On entend par pôles consécutifs deux pôles qui se suivent circonférentiellement.

L'invention telle que définie ci-dessus permet notamment de réaliser la structure bobinée en répartissant dans le corps de stator les encoches sensiblement fines et de préférence équidistantes entre deux parties centrales de pôles consécutifs circonférentiellement, de façon à produire une répartition spatiale d'induction de type trapézoïdal fixe par rapport au stator, voire sinusoïdal fixe.

Les encoches peuvent être non équidistantes entre deux parties centrales de pôles consécutifs circonférentiellement.

Le déposant a constaté qu'une telle structure bobinée peut permettre d'augmenter un couple magnétique moteur, ce qui, en présence de pertes mécaniques importantes dues à l'action des balais sur un collecteur de la machine, permet une augmentation un couple volumique également de la puissance utile, et donc du rendement de la machine.

En outre, cette structure bobinée peut permettre d'annuler des harmoniques dans la forme d'onde de l'induction dans un entrefer entre le stator et le rotor, donc de diminuer des pertes fer et par conséquent un couple magnétique résistant, ce qui permet également d'augmenter le couple utile volumique et ainsi le rendement de la machine.

De préférence, la structure bobinée peut comporter au moins un secteur formant un pôle, les encoches pouvant être disposées sur des zones entourant la partie centrale du pôle, et ces zones pouvant former sensiblement deux tiers de la longueur circonférentielle de ce secteur.

Autrement dit, les encoches peuvent être disposées sensiblement sur deux tiers de la longueur circonférentielle de ce secteur.

Ainsi, les harmoniques de rang 3 dans la forme d'onde de l'induction dans un entrefer entre le stator et le rotor sont annulées et les pertes fer diminuées.

De préférence également, toutes les encoches sur ce secteur peuvent comporter au moins un segment conducteur formant un enroulement principal.

De préférence encore, le stator peut comporter quatre secteurs formés chacun d'au moins six encoches chacun. Autrement dit, la machine comporte au moins trois paires d'encoches par pôle. Dans ce cas également, chaque première zone encochée peut s'étendre sur un angle électrique d'environ 60°.

L'angle électrique correspond à un angle effectivement mesuré au sein de la machine, encore appelé angle mécanique, multiplié par le nombre de paires de pôles de la machine, ce qui revient à considérer une machine quelconque comme une juxtaposition au sein d'un même ensemble de plusieurs machines élémentaires à une seule paire de pôles.

Selon un exemple de mise en oeuvre de l'invention, la structure bobinée du stator comporte des enroulements principaux formant un bobinage électrique disposé de manière concentrique sur un pôle du stator, ou de type à bobines égales centrées sur un pôle.

Autrement dit, la partie centrale du pôle peut présenter de part et d'autre de celle-ci un nombre d'Ampère-tours (A.t) identique, en valeur absolue.

En variante, la structure bobinée du stator peut comporter, autour de la partie centrale d'un pôle, notamment dans des encoches d'au moins deux secteurs, des enroulements permettant une pré-distorsion de la forme d'onde d'induction dans l'entrefer en plus des enroulements principaux, l'ensemble de ces enroulements formant un bobinage électrique de type à bobines égales, notamment non centrées sur une partie centrale de pôle.

Autrement dit, la partie centrale du pôle peut présenter de part et d'autre de celle-ci un nombre d'Ampère-tours (A.t) différent, en valeur absolue, de manière à produire un effet qui peut s'apparenter à un enroulement de compensation de la réaction magnétique d'induit.

Ces enroulements électriques permettant la pré-distorsion peuvent permettre, à vide, c'est-à-dire lorsque la machine ne fonctionne pas en charge, de distordre en sens inverse de l'effet produit par l'induit la forme d'onde de l'induction dans l'entrefer.

Par conséquent, lorsque la machine fonctionne normalement, c'est-à-dire en charge, la forme d'onde de l'induction dans l'entrefer peut se rapprocher le plus possible d'une forme sensiblement trapézoïdale, voire sinusoïdale.

Cette structure bobinée permet donc d'améliorer la commutation de la machine et ainsi, de réduire des pertes par commutation, et de limiter une usure des balais et des interférences par arcs électriques.

Le couple utile volumique de la machine s'en trouve donc amélioré, par un effet connu de compensation de la réaction magnétique d'induit en présence de saturation magnétique, et par conséquent son rendement.

Si on le souhaite, les segments conducteurs peuvent être formés de plusieurs fils fins disposés en parallèle afin de diminuer les pertes Joule.

De préférence, cette structure bobinée comporte des bobines égales autour de chaque partie centrale de pôle.

Selon un autre exemple de mise en oeuvre de l'invention, la structure bobinée du stator peut comporter au moins un secteur comprenant des encoches vides dans le corps magnétique du stator pour former au moins un pôle dit conséquent.

De préférence, la structure bobinée du stator peut comporter ces encoches vides sur au moins 2 secteurs non consécutifs.

Comparativement aux pôles conséquents massifs et cornus ou non cornus, de tels pôles conséquents encochés permettent de minimiser les flux magnétiques de fuites en rendant anisotrope une partie du corps du stator magnétiquement perméable.

En outre, une économie de cuivre des segments conducteurs peut être réalisée.

Selon une caractéristique particulière, au moins un aimant de compensation est inséré dans au moins une encoche vide. Cet aimant est polarisé de façon transversale c'est-à-dire sensiblement par rapport à la direction radiale de la machine.

Selon un autre exemple, si on le souhaite, au moins un aimant d'aide à la commutation peut-être mis à la place de la dent située à cheval sur deux secteurs consécutifs. Cette dent peut être d'une largeur plus importante que les dents adjacentes et couvrir une surface équivalente à plusieurs dents adjacentes.

Selon un exemple de mise en oeuvre de l'invention, la structure bobinée comporte au moins un secteur présentant, sur un côté d'un pôle, au moins un retrait de matière magnétique du corps de stator entre au moins deux encoches.

Ce retrait permet de rendre asymétrique le pôle afin de diminuer la réaction magnétique d'induit.

Cette structure bobinée peut permettre de réduire, voire sensiblement annuler, le déplacement de la ligne neutre magnétique lorsque le courant d'induit augmente, et donc annuler sensiblement les effets de la réaction magnétique d'induit. La ligne neutre magnétique est définie comme le lieu où l'induction s'annule entre deux pôles consécutifs de l'inducteur.

De préférence, ce retrait peut être réalisé sur une surface circonférentielle interne du corps magnétique du stator, notamment entre environ 1/3 et environ 1/10 de la longueur circonférentielle du secteur.

Le retrait peut avoir un profil, vu dans un axe longitudinal de la machine, ayant une forme générale oblique, ou concave, ou encore convexe.

En variante, le retrait peut avoir la forme d'une courbe présentant au moins un point d'inflexion.

En variante encore, le retrait peut présenter une forme générale en U.

Si on le souhaite, l'espace laissé par le retrait peut être remplacé par au moins une cale de positionnement non magnétique pour maintenir les enroulements électriques en place dans l'encoche.

En outre, le retrait peut s'étendre en partant d'un bord du pôle, notamment de sa partie centrale, au niveau de sa surface circonférentielle interne.

Selon encore un exemple de mise en oeuvre de l'invention, la structure bobinée du stator peut comporter au moins un retrait de matière magnétique du corps de stator dans un axe magnétique d'induit.

De préférence, le retrait peut présenter une symétrie par rapport à un plan dans lequel passe l'axe de la machine.

Le retrait est toujours dans l'axe magnétique d'induit, que celui-ci soit décalé angulairement ou non.

Si on le souhaite, ce retrait peut avoir un volume maximum dans l'axe d'induit.

Selon un exemple de mise en oeuvre de l'invention, le secteur présentant des encoches comprenant au moins un segment conducteur peut comporter sur la partie centrale du pôle au moins une fente réalisée dans le corps magnétique du stator.

Cette fente peut permettre de s'opposer aux effets de la réaction magnétique d'induit en situation de saturation magnétique.

En outre, cette fente est de préférence configurée au milieu de la partie centrale du pôle.

En outre, la fente peut présenter une profondeur supérieure à celle des encoches du secteur.

Si le secteur comporte plusieurs fentes, celles-ci peuvent être réparties régulièrement au milieu de la partie centrale de pôle.

Si on le souhaite, au moins un aimant peut être inséré dans la fente centrale ou dans la fente située dans la zone la plus saturée à cause de la réaction d'induit de manière à générer des Ampère-tours de compensation de la réaction magnétique d'induit.

Cet aimant peut par exemple présenter une hauteur égale à environ la moitié de la profondeur du corps de stator.

Si on le souhaite, la fente peut être plus profonde que l'aimant.

En variante, il est possible d'utiliser plusieurs aimants présentant une hauteur relativement faible, ces aimants étant ou non insérés dans des encoches plus profondes que les aimants.

Selon un autre exemple de mise en oeuvre de l'invention, le secteur présentant des encoches comprenant au moins un segment conducteur peut comporter à une extrémité au moins une encoche comportant un enroulement générant des Ampère-tours de signe opposé au signe des Ampère-tours générés dans un secteur voisin de cette extrémité.

Le rotor comporte des encoches comprenant des enroulements générant des Ampère-tours, et ladite extrémité du secteur est déterminée en fonction du signe des Ampère-tours générés par les enroulements du rotor, le signe des Ampère-tours générés par l'encoche située à ladite extrémité du secteur devant être opposé au signe des Ampère-tours générés par les enroulements du rotor disposés en face du secteur.

Cette structure permet de créer des pôles auxiliaires, entre des pôles principaux, de manière à réduire localement l'induction due à l'induit, et éviter ainsi de générer une force électromotrice parasite trop importante dégradant le rendement de la machine et accentuant l'usure des balais.

Cela permet d'améliorer la commutation et ainsi de minimiser les pertes par commutation.

En outre, en bénéficiant de la présence d'encoches et donc de dents entre lesdites encoches, il est possible de réduire l'induction de manière locale sans insérer de pièces supplémentaires et donc sans que soient matérialisés des pôles supplémentaires.

Selon encore un autre exemple de mise en oeuvre de l'invention, le secteur présentant des encoches comprenant au moins un segment conducteur comporte à chaque extrémité au moins un aimant d'aide à la commutation.

Cette structure, en évitant de générer une force électromotrice parasite trop importante dégradant le rendement de la machine et accentuant l'usure des balais, permet d'améliorer la commutation et ainsi de minimiser les pertes par commutation.

Si on le souhaite, un même aimant peut être utilisé sur deux secteurs adjacents.

Dans un autre exemple de mise en oeuvre de l'invention, les encoches du stator peuvent être fermées à la surface circonférentielle interne du corps magnétique du stator.

De préférence, les encoches peuvent être fermées par des cales magnétiques, permettant ainsi de minimiser les pertes fer.

Cette structure, en jouant sur un effet combiné de faible épaisseur des cales et de la saturation magnétique dans ces cales, permet de réduire les harmoniques de la forme d'onde d'induction dans l'entrefer, et d'obtenir un effet de lissage de l'induction.

Grâce à ce lissage obtenu, il peut être possible ne de pas mettre en oeuvre un procédé de vrillage des encoches du stator.

Si on le souhaite, le rotor peut comporter des encoches de type fermé.

Dans un exemple de mise en oeuvre de l'invention, le stator et le rotor peuvent comporter des encoches comprenant un isolant très mince, notamment de type Kapton.

Dans un même volume d'une machine électrique tournante, grâce à l'isolant Kapton^{®} dans les encoches, il est possible de réduire l'épaisseur de ces encoches et ainsi d'augmenter le volume du corps de stator et d'augmenter son flux magnétique.

Par exemple, l'isolant Kapton^{®} peut présenter une épaisseur d'environ 7,6 µm à environ19 µm au lieu de 0,1mm pour des conducteurs ayant comme plus petite dimension 1 mm environ.

En outre, l'isolant Kapton^{®} se présente sous la forme d'un film, ayant des caractéristiques de résistances mécanique et thermique élevées.

La machine électrique tournante peut être réversible.

Le matériau magnétique du corps de stator peut être ferromagnétique.

La machine électrique peut comporter un réducteur de vitesses.

L'invention permet, grâce à un gain de couple, de réduire la vitesse de rotation du collecteur de la machine pour un même point de fonctionnement du couple en démarreur, c'est à dire pour un couple inférieur à celui correspondant à la puissance utile maximale, pour un même point de fonctionnement du couple, ce qui assure un temps plus long pour commuter et par conséquent une réduction des pertes et de l'usure par arcs électriques (étincelles) des balais et du collecteur.

En outre, toujours grâce à l'invention, du fait de la réduction de l'amplitude des arcs électriques, par l'amélioration de la commutation, il est possible de limiter les perturbations électromagnétiques conduites et rayonnées, ce qui est particulièrement avantageux concernant la compatibilité électromagnétique (CEM) d'équipements électriques et électroniques (à bord d'un véhicule ou non) avec la machine électrique.

La machine électrique selon l'invention peut être agencée pour opérer à une puissance utile maximale comprise entre 500 W et 2000 W par exemple.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en coupe, une machine électrique tournante à courant continu selon l'état de la technique d'un démarreur de véhicule automobile,
- la figure 2 représente, schématiquement et partiellement, un démarreur de véhicule automobile conforme à un exemple de mise en oeuvre de l'invention,
- la figure 3a représente, schématiquement et partiellement, en coupe, une machine électrique tournante à courant continu selon l'invention,
- la figure 3b représente, schématiquement et partiellement, l'agencement du bobinage électrique dans la machine de la figure 3a,
- la figure 3c représente une vue développée du bobinage du stator,
- la figure 3d représente, schématiquement et partiellement, un exemple de la structure bobinée de la machine de la figure 3a, avec un aimant d'aide à la commutation conformément à un exemple de mise en oeuvre de l'invention,
- les figures 4a et 4b sont deux graphes représentant une forme d'onde d'induction le long d'une circonférence dont le rayon est approximativement à mi-hauteur des dents, respectivement selon l'état de la technique et l'invention,
- les figures 5a et 5b sont deux graphes représentant la forme d'onde d'induction dans un entrefer de la machine de la figure 3a en fonction de l'angle électrique, respectivement selon l'état de la technique et l'invention,
- les figures 6a et 6b représentent, schématiquement et partiellement, une variante d'agencement du bobinage électrique dans la machine de la figure 3a, avec des enroulements permettant une pré-distorsion de la forme d'onde,
- la figure 6c représente une vue développée du bobinage du stator,
- les figures 7a et 7b représentent, schématiquement et partiellement, deux exemples de la structure bobinée de la machine de la figure 3a, avec des pôles conséquents, selon un autre exemple de mise en oeuvre de l'invention,
- les figures 8a, 8b, 8c, 8d et 8e représentent, schématiquement et partiellement, cinq exemples de la structure bobinée de la machine de la figure 3a avec des retraits selon un exemple de mise en oeuvre de l'invention,
- la figure 9 est un graphe représentant la forme d'onde d'induction dans l'entrefer en fonction de l'angle électrique, selon l'exemple de mise en oeuvre de l'invention de la figure 6b,
- les figures 10a, 10b et 10c représentent, schématiquement et partiellement, trois exemples de la structure bobinée de la machine de la figure 3a, avec des retraits,
- les figures 11a, 11b et 11c représentent, schématiquement et partiellement, trois exemples de la structure bobinée de la machine de la figure 3a, avec au moins une fente conformément à un autre exemple de mise en oeuvre de l'invention,
- les figures 12a et 12b représentent, schématiquement et partiellement, deux exemples de la structure bobinée de la machine de la figure 3a avec des enroulements auxiliaires selon encore un exemple de mise en oeuvre de l'invention,
- la figure 13 est un graphe représentant une forme d'onde d'induction dans l'entrefer en fonction de l'angle électrique.
- la figure 14 représente, schématiquement et partiellement, un exemple de la structure bobinée de la machine de la figure 3a avec des encoches fermées,
- les figures 15a et 15b sont deux graphes représentant la forme d'onde d'induction dans l'entrefer en fonction de l'angle électrique, respectivement selon un exemple de mise en oeuvre de l'invention d'une structure bobinée avec encoches ouvertes et fermées,
- la figure 16 représente, schématiquement et partiellement, une machine électrique tournante selon un autre exemple de mise en oeuvre de l'invention.

On a représenté très schématiquement sur la figure 2 un démarreur 1 pour moteur à combustion de véhicule automobile.

Ce démarreur 1 à courant continu comprend, d'une part, un rotor 2, encore appelé induit, pouvant tourner autour d'un axe X, et d'autre part, un stator 3, encore appelé inducteur, autour du rotor 2.

Ce stator 3 comporte une culasse 4 portant une structure bobinée 50 à excitation par enroulements électriques formant un bobinage inducteur 52.

Le bobinage inducteur 52 forme, de part et d'autre d'un corps de stator 54, un chignon avant 51 et un chignon arrière 53.

Le rotor 2 comporte un corps de rotor 7 et un bobinage 8 enroulé dans des encoches du corps de rotor 7.

Le bobinage 8 forme, de part et d'autre du corps de rotor 7, un chignon avant 91 et un chignon arrière 10.

Le rotor 2 est pourvu, à l'arrière, d'un collecteur 12 comprenant une pluralité de pièces de contact connectées électriquement aux éléments conducteurs, formés dans l'exemple considéré par des fils, du bobinage 8.

Un groupe de balais 13 et 14 est prévu pour l'alimentation électrique du bobinage 8, l'un des balais 13 étant relié à la masse du démarreur 1 et un autre des balais 14 étant relié à une borne électrique 15 d'un contacteur 17 via un fil 16. Les balais sont par exemple au nombre de quatre.

Les balais 13 et 14 viennent frotter sur le collecteur 12 lorsque le rotor 2 est en rotation, permettant l'alimentation du rotor 2 par commutation du courant électrique dans des sections du rotor 2.

Le démarreur 1 comporte en outre un ensemble lanceur 19 monté de manière coulissante sur un arbre d'entraînement 18 et pouvant être entraîné en rotation autour de l'axe X par le rotor 2.

Un ensemble réducteur de vitesses 20 est interposé entre le rotor 2 et l'arbre d'entraînement 18, de manière connue en soi.

En variante, le démarreur 1 peut être du type 'Direct Drive', dépourvu de réducteur de vitesses.

L'ensemble lanceur 19 comporte un élément d'entraînement formé par une poulie 21 et destiné à s'engager sur un organe d'entraînement du moteur à combustion, non représenté. Cet organe d'entraînement est par exemple une courroie.

La poulie 21 peut être remplacée par un élément d'engrenage, notamment une roue dentée, pour entraîner le moteur à combustion.

L'ensemble lanceur 19 comprend en outre une roue libre 22 et une rondelle poulie 23 définissant entre elles une gorge 24 pour recevoir l'extrémité 25 d'une fourchette 27.

Cette fourchette 27 est réalisée par exemple par moulage d'une matière plastique.

La fourchette 27 est actionnée par le contacteur 17 pour déplacer l'ensemble lanceur 19 par rapport à l'arbre d'entraînement 18, suivant l'axe X, entre une première position dans laquelle l'ensemble lanceur 19 entraîne le moteur à combustion par l'intermédiaire de la poulie 21, et une deuxième position dans laquelle l'ensemble lanceur 19 est désengagé du moteur à combustion.

Le contacteur 17 comprend, outre la borne 15 reliée au balai 14, une borne 29 reliée via un élément de liaison électrique, notamment un fil 30, à une alimentation électrique du véhicule, notamment une batterie.

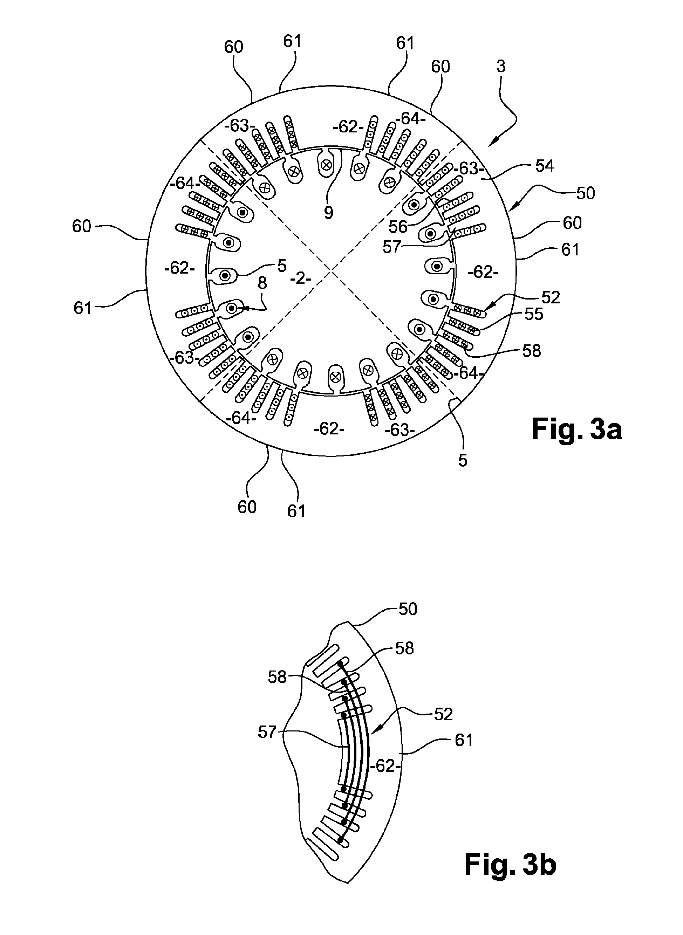

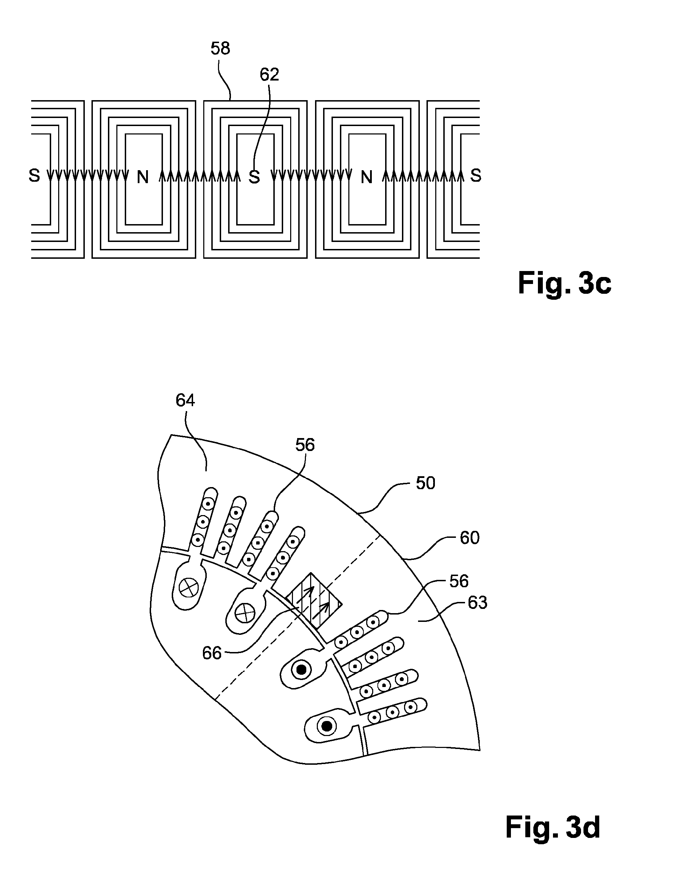

On a représenté sur la figure 3a un exemple de structure bobinée 50 conforme à un premier exemple de mise en oeuvre de l'invention.

Cette structure bobinée 50 s'étend suivant une circonférence du stator 3 et comporte le corps magnétique de stator 54.

La structure bobinée 50 comporte quatre secteurs 60 séparés par les pointillés S de la figure 3a et formant chacun un pôle 61.

Chaque pôle 61 comporte une partie centrale 62 faite de matériau magnétique, par exemple ferromagnétique, du corps de stator 54, et de deux zones 63 et 64 adjacentes à la partie centrale 61, et l'entourant suivant la circonférence du stator 3.

Ces zones 63 et 64 comportent des encoches 56 dans lesquelles sont insérés des segments conducteurs 55 formant des enroulements principaux 58 du bobinage électrique 52, et des dents 57.

Ces zones 63 et 64 forment environ deux tiers de la longueur circonférentielle du secteur 60.

Les encoches 56 sont fines par rapport à la partie centrale de pôle 62, et sont équidistantes entre deux parties centrales 62 de pôles consécutifs 61.

Les enroulements principaux 58 sont agencés de manière à former le bobinage électrique 52 concentrique sur le pôle 61, comme visible de manière schématique à la figure 3b et de façon développée à la figure 3c.

La partie centrale 62 du pôle 61 présente ainsi de part et d'autre de celle-ci un nombre d'Ampère-tours (A.t) identique, en valeur absolue, au signe près.

Comme visible à la figure 3b, la structure bobinée 50 comporte, entre deux encoches 56 situées sur des zones 63 et 64 adjacentes de deux secteurs 60 voisins, un aimant 66 polarisé radialement formant un pôle auxiliaire d'aide à la commutation.

Cette structure 50, en évitant de générer une force électromotrice parasite trop importante dégradant le rendement de la machine et accentuant l'usure des balais, permet d'améliorer la commutation et ainsi de minimiser les pertes par commutation.

On a également représenté à la figure 3a les encoches 5 du rotor 2 ainsi qu'un entrefer 9 formé entre la surface circonférentielle interne du stator 3 et la surface circonférentielle externe du rotor 2.

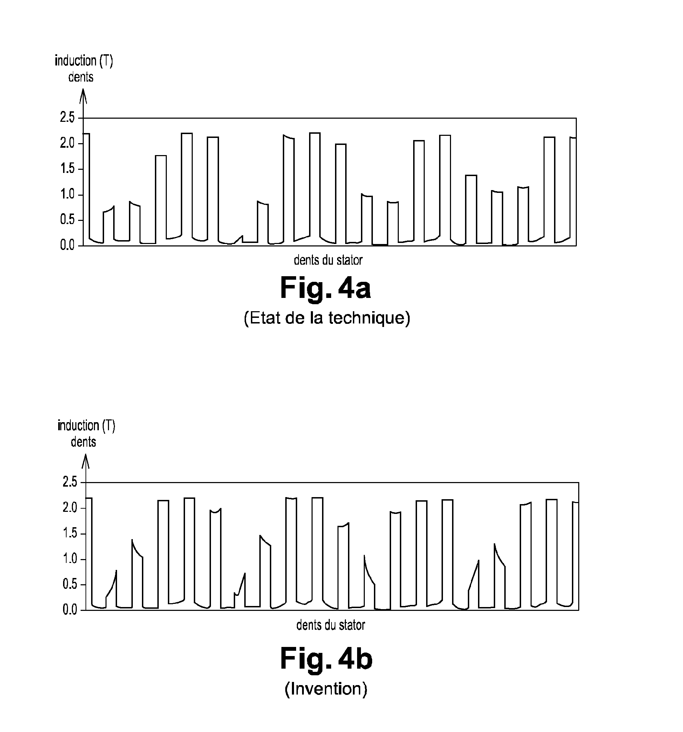

Comme visible aux figures 4a et 4b, qui représentent une forme d'onde de l'induction le long d'une circonférence dont le rayon est approximativement à mi-hauteur des dents 57 du stator 3 respectivement selon l'état de la technique et l'invention, l'induction est plus uniforme grâce à l'invention ce qui montre que les dents 57 du stator 3 sont mieux utilisées.

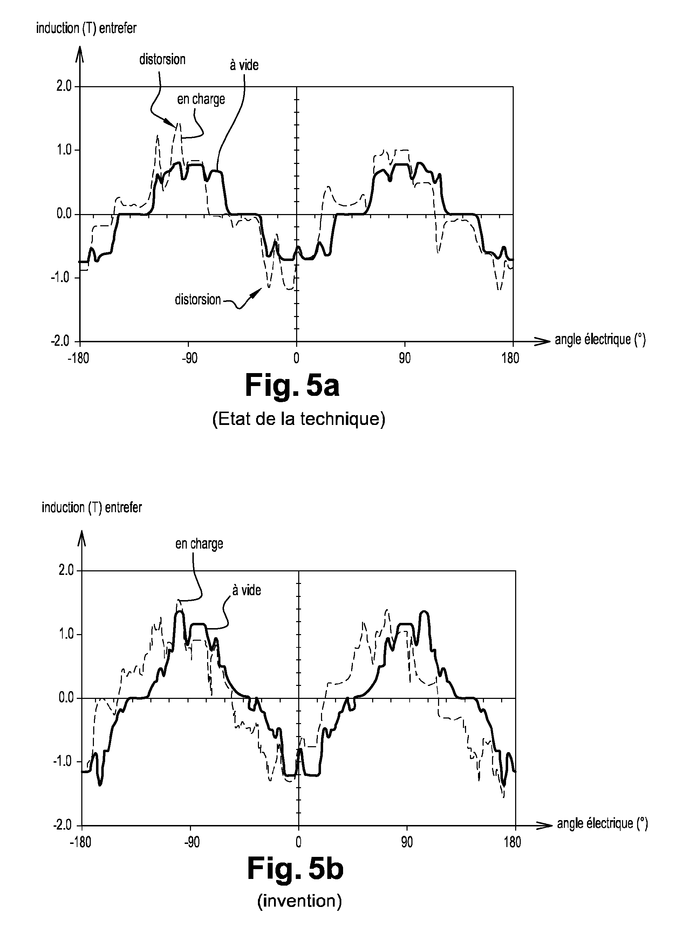

Comme visible aux figures 5a et 5b, qui représentent la forme d'onde d'induction dans l'entrefer 9 de la machine de la figure 3a en fonction de l'angle électrique, respectivement selon l'état de la technique et l'invention, une distorsion apparaît entre les états à vide et en charge dans la machine de l'état de la technique. En effet, le profil de type créneau est perdu, avec pour conséquence une sur-utilisation et une sous-utilisation du matériau magnétique dans les dents, alors que grâce à l'invention, la distorsion est atténuée fortement, comme l'illustre la figure 5b.

Comme visible également à la figure 5b, un déphasage est présent entre les états à vide et en charge, à la place d'une distorsion, ce qui est bénéfique car sans conséquences sur le contenu harmonique de la forme d'onde.

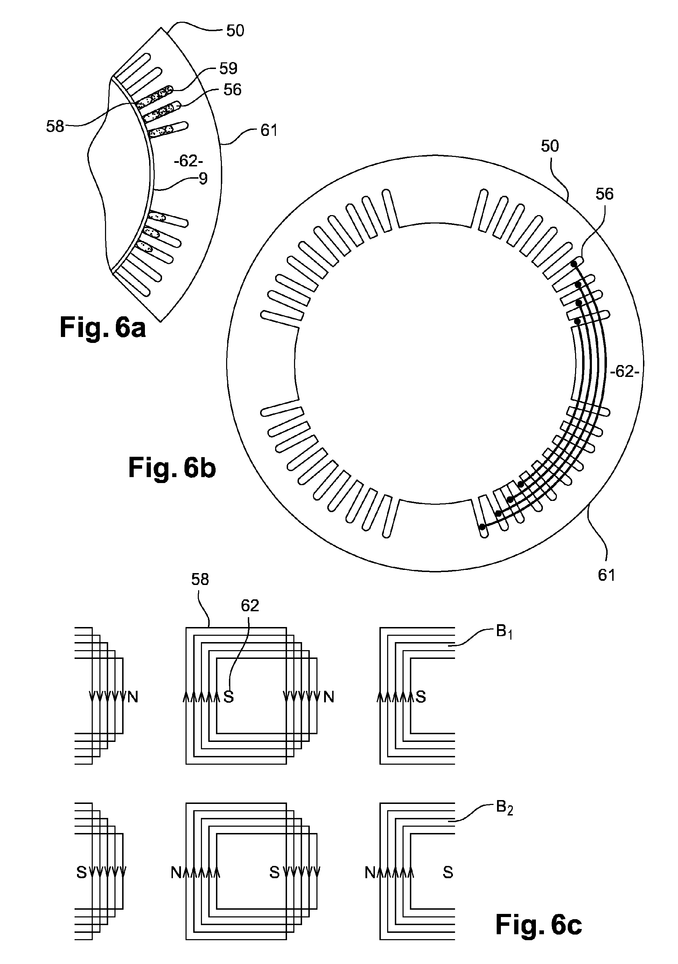

Les figures 6a et 6b montrent une structure bobinée 50 comportant, autour de la partie centrale 62 d'un pôle 61, des enroulements 59 permettant une pré-distorsion de la forme d'onde d'induction dans l'entrefer 9 en plus des enroulements principaux 58.

Ces enroulements 58 et 59 agencés en bobines égales sont superposés dans les encoches 56 pour obtenir un déséquilibre du nombre d'Ampère-tours (A.t) différent, en valeur absolue, de part et d'autre de la partie centrale 62 du pôle 61. On superpose deux jeux de bobines (B1 et B2) égales d'enroulements 58. Pour obtenir un déséquilibre avec des ampères tours différents pour les jeux de bobines B1 et B2, on peut par exemple mettre un nombre différent de spires en série par encoche.

Cela permet de produire un effet qui peut s'apparenter à un enroulement de compensation de la réaction magnétique d'induit, c'est-à-dire que ces enroulements 59 permettent de distordre en sens inverse de ce que produit l'induit la forme d'onde de l'induction dans l'entrefer, de manière à ce que cette forme d'onde soit proche du trapèze, voire du sinus.

Ces enroulements permettant une pré-distorsion 59 sont réalisés sur tous les pôles 61 de la machine 1.

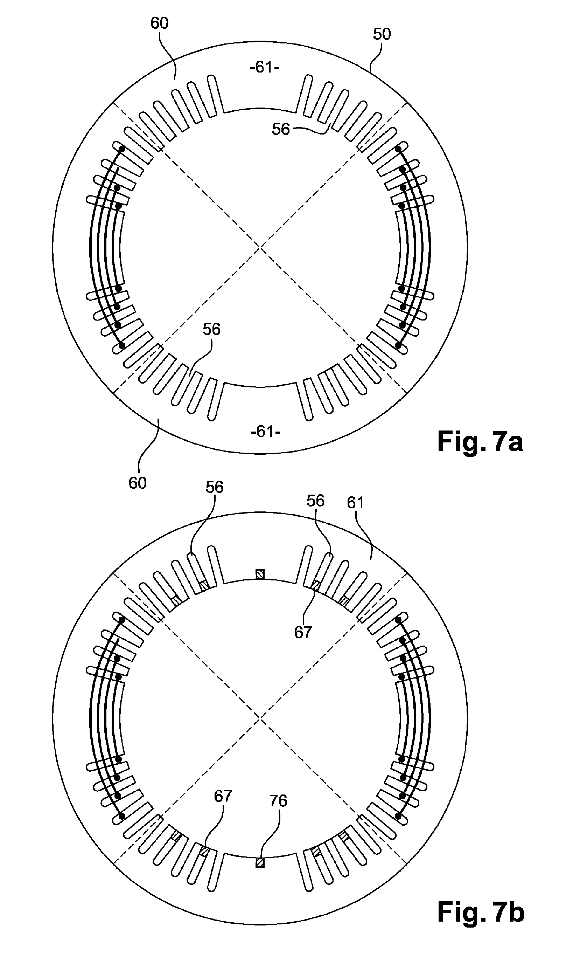

Selon un exemple de réalisation de l'invention illustré à la figure 7a, la structure bobinée 50 comporte deux secteurs 60 non consécutifs comprenant des encoches vides 56 pour former au moins pôle 61 dit conséquent.

Comparativement aux pôles conséquents massifs et cornus ou non cornus, de tels pôles conséquents encochés permettent de minimiser les flux magnétiques de fuites en rendant anisotrope une partie du corps de stator 54 magnétiquement perméable.

Comme visible à la figure 7b, la structure bobinée 50 comporte, dans des encoches vides 56 situées sur un pôle conséquent 61, des aimants 67 polarisés transversalement formant des ampères- tours de compensation. L'aimant 76 situé au milieu du pôle conséquent est un aimant de compensation. On peut prévoir plusieurs aimants de compensation dans ledit pôle.

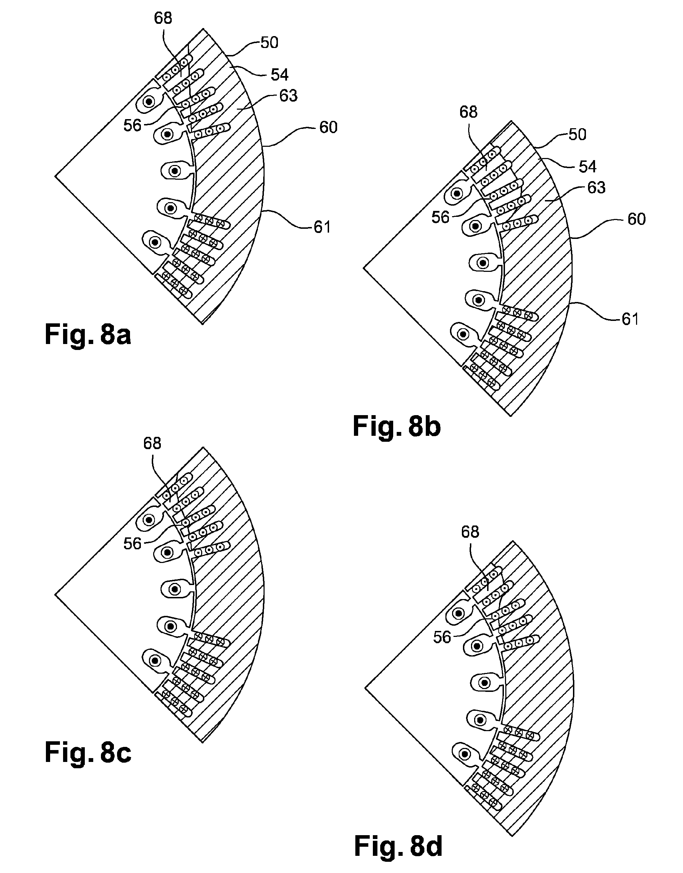

Comme l'illustrent les figures 8a à 8e, la structure bobinée 50 comporte un secteur 60 comprenant sur un côté du pôle 61, c'est-à-dire sur la zone 63, un retrait 68 de matière magnétique du corps de stator 54 entre des encoches 56. Le retrait 68 ne se poursuit pas dans le secteur 60 adjacent. Le retrait 68 est périodique circonférentiellement d'un secteur 60.

Ce retrait 68 permet de rendre asymétrique le pôle 61 afin de diminuer les effets de la réaction magnétique d'induit en particulier le décalage angulaire de la ligne neutre.

Le retrait 68 est réalisé le long de la surface circonférentielle interne du corps magnétique de stator 54 et s'étend à partir du bord du pôle 61, au niveau de cette surface circonférentielle interne du corps de stator 54, vers le fond des encoches 56, sur une longueur comprise dans un intervalle d'environ 1/3 à environ 1/10 de la longueur circonférentielle du secteur 60.

Comme visible respectivement aux figures 8a, 8b et 8c, le retrait présente, vu dans un l'axe X, un profil ayant une forme générale oblique, concave, ou convexe.

Le retrait 68 de la figure 8d présente, vu dans un l'axe X, la forme d'une courbe présentant un point d'inflexion.

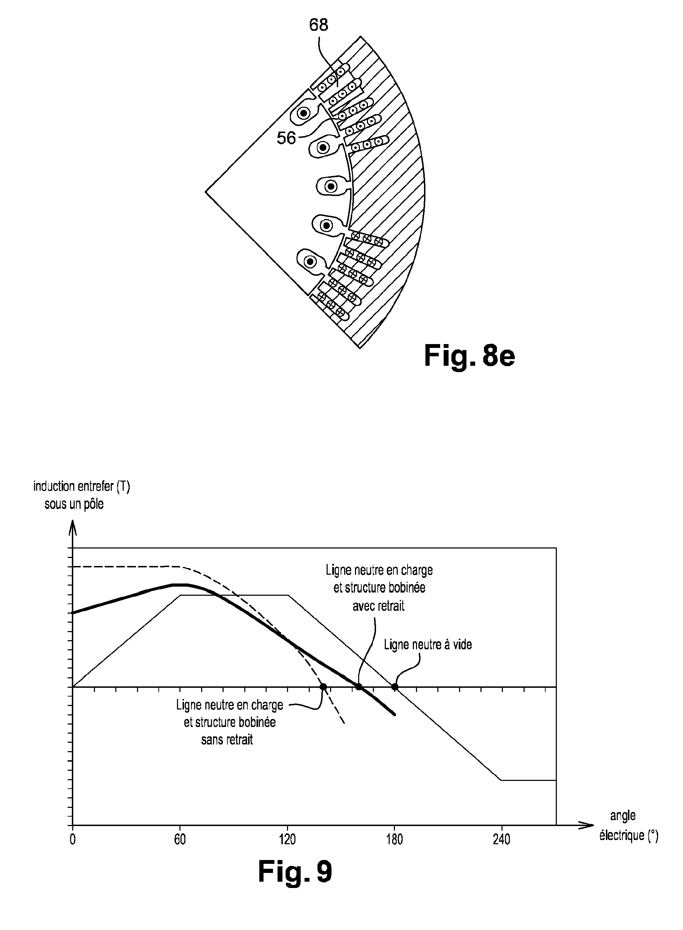

Le retrait 68 de la figure 8e présente, vu dans un l'axe X, une forme générale en U.

La figure 9 représente la forme d'onde d'induction dans l'entrefer 9 sous un pôle 61 en fonction de l'angle électrique, lorsque la structure bobinée 50 comporte un retrait 68 comme illustré à la figure 8e.

Le décalage angulaire de la ligne neutre de la machine lorsqu'elle fonctionne à vide et en charge permet de quantifier l'effet de la réaction magnétique d'induit.

L'enlèvement de matière permet, en charge, de réduire le déplacement, ou le décalage angulaire, de la ligne neutre magnétique lorsque le courant d'induit augmente, et donc d'annuler sensiblement les effets de la réaction magnétique d'induit. La ligne neutre magnétique est définie comme le lieu où l'induction s'annule entre deux pôles 61 consécutifs de l'inducteur.

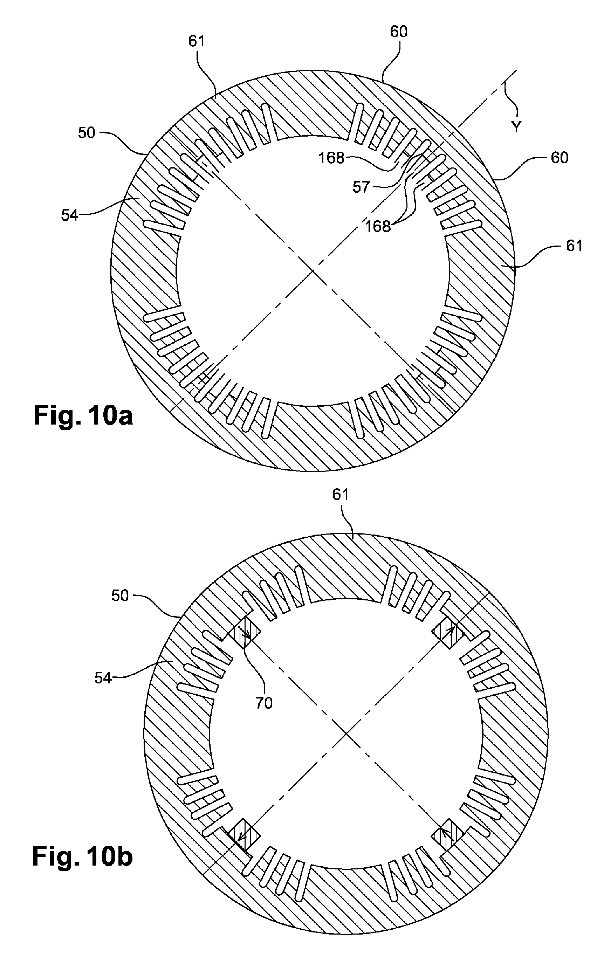

Selon un autre mode de réalisation de l'invention, en référence à la figure 10a, la structure bobinée 50 comporte au moins un retrait 168 de matière magnétique du corps de stator 54 dans l'axe magnétique Y de l'induit.

Ce retrait 168 permet de réduire la perméance magnétique dans l'axe d'induit Y afin d'améliorer la commutation par diminution de l'inductance d'induit.

Cette structure 50, en évitant de générer une force électromotrice parasite trop importante dégradant le rendement de la machine et accentuant l'usure des balais, permet d'améliorer la commutation et ainsi de minimiser les pertes par commutation.

Dans l'exemple représenté à la figure 10a, le retrait 168 est réalisé sur une dent et demie 57 sur un secteur 60 à chaque extrémité de chaque pôle 61 de la structure bobinée 50 et présente de préférence une symétrie par rapport à un plan dans lequel passe l'axe X de la machine.

La dent 57 se trouvant dans l'axe magnétique d'induit Y présente un volume d'enlèvement de matière ferromagnétique maximum.

Autrement dit, les dents 57 présentent une hauteur différente en fonction de l'enlèvement de matière.

Comme visible à la figure 10b, le retrait 168 est réalisé à cheval sur deux pôles 61 consécutifs, et la structure bobinée 50 comporte un pôle auxiliaire d'aide à la commutation formé par un aimant permanent 70 polarisé radialement, dans la zone comprenant le retrait 168 et au moins deux encoches 52 adjacentes. Le retrait peut n'être que partiel, c'est-à-dire qu'il peut ne pas être aussi profond qu'une encoche 52.

L'aimant 70 est disposé à cheval sur le corps de stator 54, autrement dit il n'y a pas d'encoche réalisée sous cet aimant 70.

L'aimant 70 est donc disposé sur deux secteurs 60 adjacents.

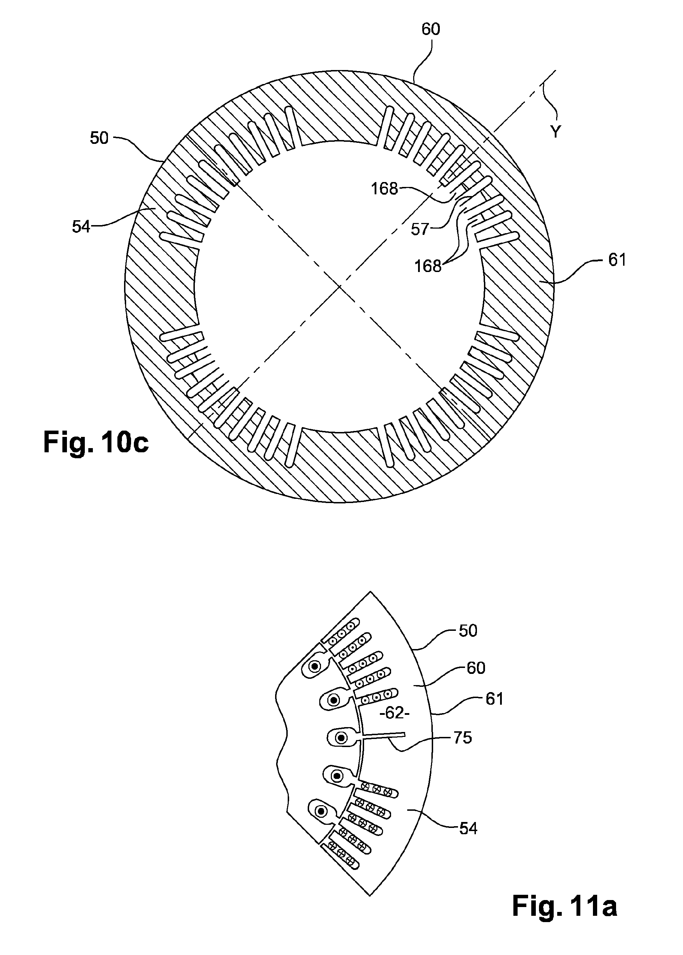

Comme visible à la figure 10c, le retrait 168 est décalé angulairement par rapport au retrait de la figure 10a de manière à suivre l'axe d'induit Y, afin d'améliorer la commutation.

Dans ce cas, le retrait 168 est réalisé sur trois dents 57 de chaque pôle 61 de la structure bobinée 50 et présente également une symétrie par rapport à un plan dans lequel passe l'axe X de la machine.

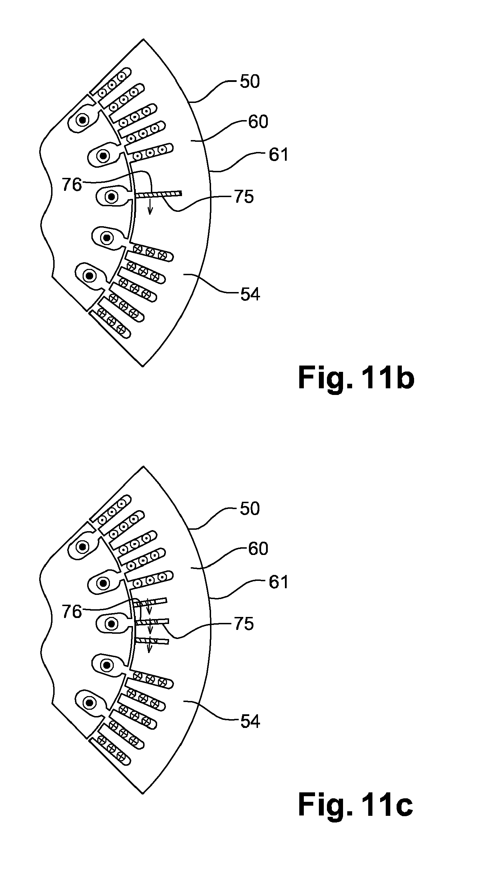

Selon un autre mode de réalisation de l'invention, en référence à la figure 11 a, le secteur 60 comporte sur la partie centrale 62 du pôle 61 une fente 75 réalisée dans le corps magnétique du stator 54 et disposée au milieu de cette partie centrale 62.

Cette fente 75 permet de s'opposer aux effets de la réaction magnétique d'induit en situation de saturation magnétique.

Si on le souhaite, la partie centrale 62 du pôle 61 peut comporter plusieurs fentes 75, par exemple trois.

Comme visible à la figure 11b, un aimant 76 polarisé transversalement est inséré dans la fente 75 de manière à lutter contre les effets de la saturation due à la réaction magnétique d'induit.

En effet, cet aimant 76 génère des Ampère-tours de compensation de la réaction magnétique d'induit.

Dans l'exemple décrit à la figure 11b, l'aimant 76 présente une hauteur égale à environ la moitié de la profondeur du corps de stator 54, et est égale à la profondeur de la fente 75.

Si on le souhaite, la fente peut être plus profonde que l'aimant.

La fente peut être plus profonde que les encoches.

Comme illustré à la figure 11c, la structure bobinée 50 comporte trois fentes 75 sur une partie centrale de pôle 62, chacune des fentes 75 étant moins profonde que les encoches 56 de ce pôle 61, et un aimant 76 est inséré dans chacune des fentes 75.

Chaque aimant 76 présente une hauteur ne permettant pas de remplir complètement la fente 75 associée.

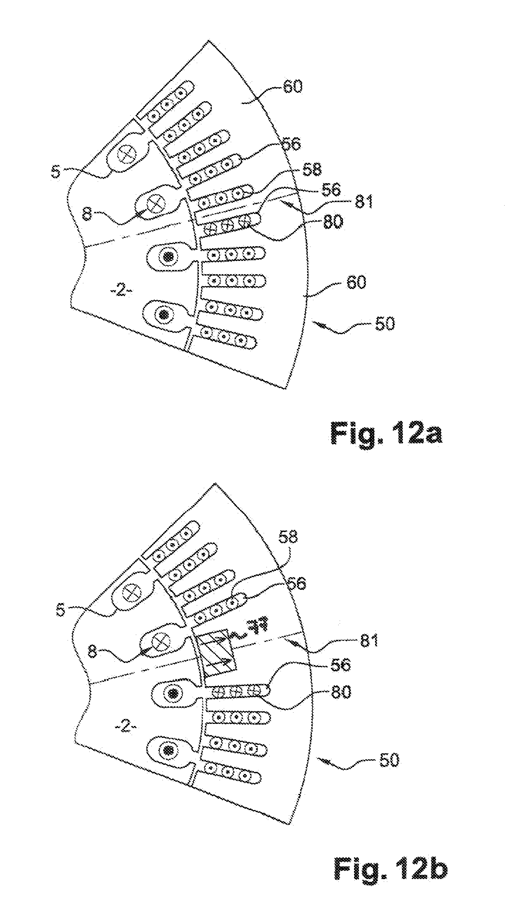

Selon un autre exemple de mise en oeuvre de l'invention illustré à la figure 12a, un secteur 60 comporte à une extrémité 81 une encoche 56 comportant un enroulement 80 générant des Ampère-tours de signe opposé au signe des Ampère-tours générés dans un secteur voisin 60 de cette extrémité 81.

L'extrémité 81 du secteur 60 est choisie en fonction du signe des Ampère-tours générés par des enroulements du bobinage électrique 8 du rotor 2.

En effet, le signe des Ampère-tours générés par l'enroulement 80 situé à l'extrémité 81 du secteur 60 doit être opposé au signe des Ampère-tours générés par les enroulements 8 du rotor 2 disposés en face de ce secteur 60.

Cela permet d'améliorer la commutation et ainsi de minimiser les pertes par commutation.

Comme visible à la figure 12b, la structure bobinée 50 comporte en outre, entre, d'une part, l'encoche 56 comprenant l'enroulement 81 générant des Ampère-tours de signe différent et située à une extrémité 80 d'un secteur 60, et, d'autre part, l'encoche 56 d'un secteur 60 voisin de cette extrémité 81, un aimant 77 polarisé radialement formant un pôle auxiliaire d'aide à la commutation.

Cette structure 50, en évitant de générer une force électromotrice parasite trop importante dégradant le rendement de la machine et accentuant l'usure des balais, permet d'améliorer la commutation et ainsi de minimiser les pertes par commutation.

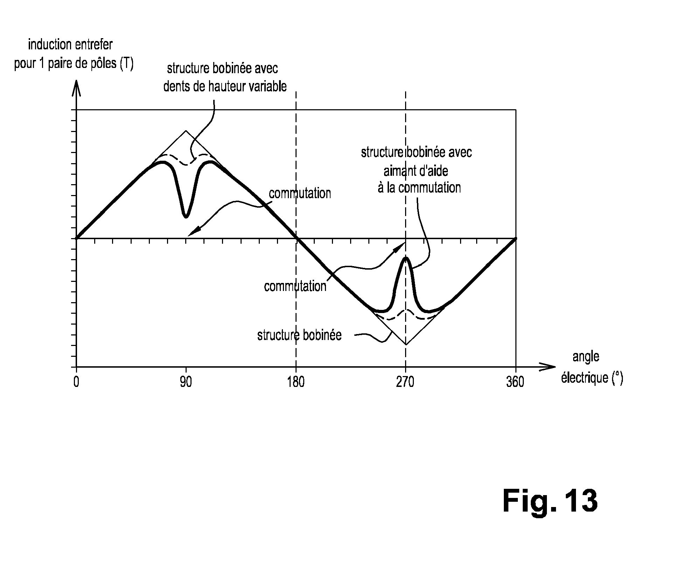

La figure 13 est un graphe qui représente une forme d'onde d'induction dans l'entrefer 9 en fonction de l'angle électrique, lorsque l'on cherche à améliorer la commutation.

On voit sur ce graphe que la densité de flux magnétique est, en fonction de la structure bobinée choisie, largement réduite lors de commutations.

En effet, la structure bobinée comportant des dents de hauteur variable permet de réduire l'intensité de l'induction dans l'entrefer lors de commutations en comparaison à cette même induction dans le cas d'une structure bobinée avec des dents de hauteur identique.

En outre, on s'aperçoit qu'une structure bobinée comprenant au moins un aimant d'aide à la commutation permet encore de réduire l'intensité de l'induction dans l'entrefer dans la plage angulaire où se déroule la commutation.

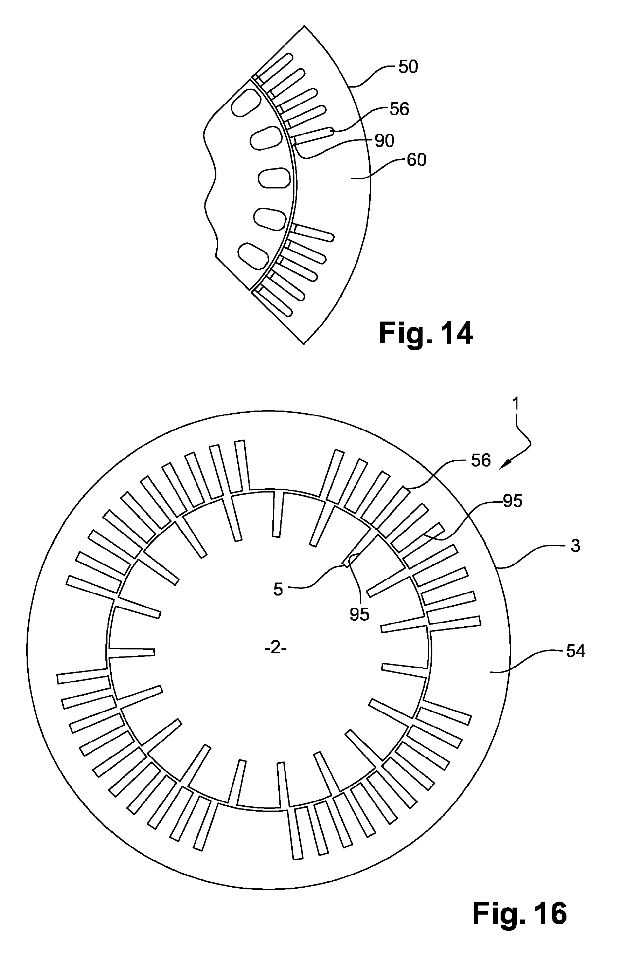

Dans un autre exemple de mise en oeuvre de l'invention illustré à la figure 14, les encoches 56 de la structure bobinée 50 sont fermées, grâce à des cales magnétiques 90, par exemple collées à la surface circonférentielle interne du corps magnétique du stator 54.

Cette structure bobinée 50 permet d'une part de minimiser les pertes fer, et, d'autre part, d'obtenir un effet de lissage de l'induction en jouant sur un effet combiné de faible épaisseur des cales 90 et de la saturation magnétique dans ces cales 90.

Grâce à ce lissage obtenu, il peut être possible ne de pas mettre en oeuvre un procédé de vrillage des encoches du stator.

Si on le souhaite, le rotor 2 peut comporter des encoches 5 de type fermé.

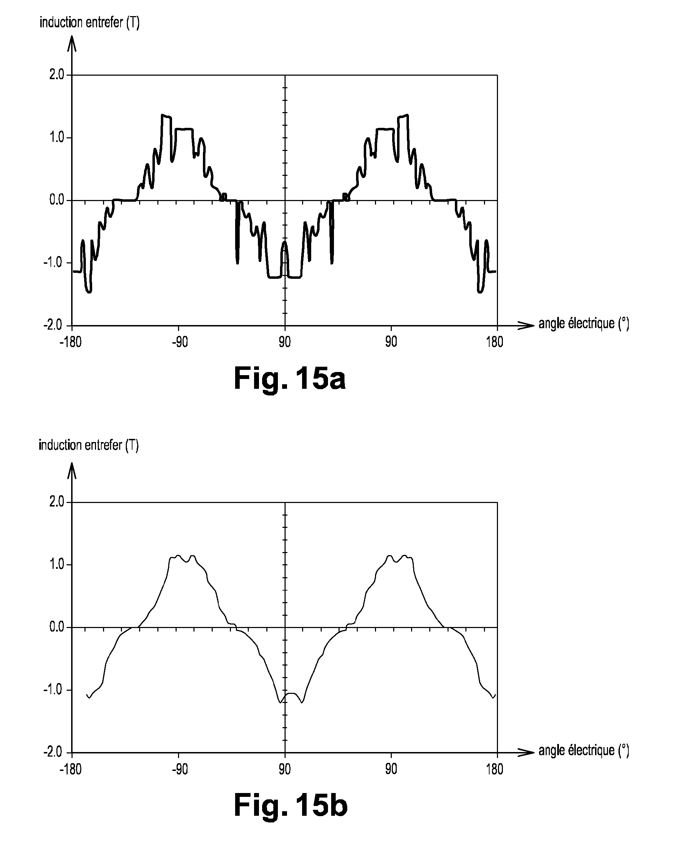

Comme visible aux figures 15a et 15b qui représentent la forme d'onde d'induction dans l'entrefer 9 en fonction de l'angle électrique, respectivement dans le cas d'une structure bobinée 50 avec encoches 56 ouvertes et fermées, on voit l'effet de lissage de cette forme d'onde lorsque les encoches 56 sont fermées.

La figure 16 illustre un exemple de mise en oeuvre de l'invention selon lequel le stator 3 et le rotor 2 comportent des encoches 56 et 5 comprenant un isolant très mince 95, de type Kapton^{®}.

L'utilisation de cet isolant extrêmement mince 95 permet, dans un même volume du démarreur 1, de réduire l'épaisseur des encoches 56 et 5 et ainsi d'augmenter le volume du corps de stator 54.

Par exemple, l'isolant Kapton^{®} 95 peut présenter une épaisseur d'environ 7,6 µm à environ 19 µm.

Les variantes décrites peuvent être mises en oeuvre seules ou en combinaison sans sortir du cadre de l'invention.

## Revendications

1. Machine électrique tournante à courant continu, notamment pour un démarreur de véhicule automobile, la machine comportant :
- un stator (3) comportant une structure bobinée (50) formant une pluralité de pôles, s'étendant suivant une circonférence du stator (3),
- un rotor (2),
- un groupe de balais (13, 14) agencés pour permettre l'alimentation électrique du rotor (2) par commutation du courant électrique dans des sections du rotor (2),
la machine (1) étant **caractérisée par le fait que** la structure bobinée (50) du stator (3) comporte une pluralité d'encoches (56) entre deux parties centrales (62) de pôles consécutifs (61) dudit stator (3), ces encoches (56) étant formées dans un corps magnétique (54) du stator (3), et **par le fait qu'**au moins une de ces encoches (56) comprend au moins un segment conducteur (55) formant un enroulement (58) de bobinage électrique (52), et **par le fait que** la structure bobinée (50) du stator (3) comporte au moins un secteur (60) formant un pôle (61), les encoches (56) étant disposées sur des zones (63, 64) entourant la partie centrale (62) du pôle (61).

2. Machine selon la revendication précédente, **caractérisée par le fait que** ces zones (63, 64) forment sensiblement deux tiers de la longueur circonférentielle de ce secteur (60).

3. Machine selon l'une quelconque des revendications précédentes, **caractérisée par le fait que** la structure bobinée (50) du stator (3) comporte des enroulements principaux (58) formant un bobinage électrique (52) disposés de manière concentrique sur un pôle (61) du stator (3).

4. Machine selon l'une quelconque des revendications 1 à 2, **caractérisée par le fait que** la structure bobinée (50) du stator (3) comporte, autour de la partie centrale (62) d'un pôle (61), des enroulements principaux (58) et des enroulements (59) permettant une pré-distorsion d'une forme d'onde d'induction dans un entrefer (9) entre le rotor (2) et le stator (3), l'ensemble de ces enroulements (58, 59) formant un bobinage électrique de type à bobines égales.

5. Machine selon l'une quelconque des revendications 1 à 3, **caractérisée par le fait que** la structure bobinée (50) du stator (3) comporte au moins un secteur (60) comprenant des encoches vides (56) dans le corps magnétique (54) du stator (3) pour former au moins un pôle (61) de type conséquent.

6. Machine selon la revendication précédente, **caractérisée par le fait qu'**au moins un aimant de compensation (67) est inséré dans au moins une encoche vide (56).

7. Machine selon l'une quelconque des revendications précédentes, **caractérisée par le fait que** la structure bobinée (50) comporte au moins un secteur (60) présentant, sur un côté d'une partie centrale (62) de pôle (61), au moins un retrait (68) de matière magnétique du corps de stator (54) entre au moins deux encoches (56).

8. Machine selon l'une quelconque des revendications 1 à 6, **caractérisée par le fait que** la structure bobinée (50) du stator (3) comporte au moins un retrait (168) de matière magnétique du corps de stator (54) dans un axe magnétique du stator (Y).

9. Machine selon l'une quelconque des revendications précédentes, **caractérisée par le fait que** le secteur (60) présentant des encoches (56) comprenant au moins un segment conducteur (55) comporte sur une partie centrale (62) d'un pôle (61) au moins une fente (75) réalisée dans le corps magnétique du stator (54).

10. Machine selon la revendication précédente, **caractérisée par le fait qu'**au moins un aimant (76) est inséré dans une fente (75).

11. Machine selon l'une quelconque des revendications précédentes, **caractérisée par le fait que** le secteur (60) présentant des encoches (56) comprenant au moins un segment conducteur (55) comporte à une extrémité (81) au moins une encoche (56) comportant un enroulement (80) générant des Ampère-tours de signe opposé au signe des Ampère-tours générés par des enroulements (58) dans un secteur voisin (60) de cette extrémité (81).

12. Machine selon la revendication précédente, le rotor (2) comportant des encoches (5) comprenant des enroulements (8) générant des Ampère-tours, **caractérisée par le fait que** l'extrémité (81) du secteur (60) est déterminée en fonction du signe des Ampère-tours générés par les enroulements du rotor (2), le signe des Ampère-tours générés par l'encoche (56) située à ladite extrémité (81) du secteur (60) devant être opposé au signe des Ampère-tours générés par les enroulements (8) du rotor (2) disposés en face de ce secteur (60).

13. Machine selon l'une quelconque des revendications précédentes, **caractérisée par le fait que** le secteur (60) présentant des encoches (56) comprenant au moins un segment conducteur (55) comporte à chaque extrémité (81) au moins un aimant d'aide à la commutation (66, 70, 77).

14. Machine selon l'une quelconque des revendications précédentes, **caractérisée par le fait que** les encoches (56) du stator (3) sont fermées à la surface circonférentielle interne du corps magnétique (54) du stator (3), notamment par des cales magnétiques (90).

15. Machine selon l'une quelconque des revendications précédentes, **caractérisée par le fait que** le stator (3) et le rotor (2) comportent des encoches (56, 5) comprenant un isolant très mince (95), notamment de type Kapton^{®}.

16. Démarreur (1) de véhicule automobile comprenant une machine électrique tournante selon l'une quelconque des revendications précédentes.
